# FASCICULE DE BREVET EUROPEEN

(11) **EP 1 448 680 B1**
(45) Date de publication et mention de la délivrance du brevet: **26.07.2006**
(21) Numéro de dépôt: 02774743.5
(22) Date de dépôt: 18.10.2002
(51) Int. Cl.: C08J 7/04, B60K 15/03

(54) **CORPS CREUX IMPERMEABLE EN MATERIAU THERMOPLASTIQUE**
UNDURCHLÄSSIGER HOHLKÖRPER AUS THERMOPLASTISCHEM MATERIAL
THERMOPLASTIC IMPERMEABLE HOLLOW BODY

(30) Priorité: 19.10.2001 FR 0113627
(43) Date de publication de la demande: 25.08.2004
(73) Titulaire: Inergy Automotive Systems Research (SA), 1120 Bruxelles (BE)
(72) Inventeur: DUBOIS, Eric, B-4280 HANNUT (BE); DOUGNIER, François, B-3190 BOORTMEERBEEK (BE); LEONARD, Stéphane, B-1070 BRUXELLES (BE)
(74) Mandataire: Jacques, Philippe
(86) Numéro de dépôt international: PCT/EP2002/011814
(87) Numéro de publication internationale: WO 2003/035727

(56) Documents cités:
- EP-A- 1 122 113
- FR-A- 2 776 228
- JP-A- 8 323 912
- US-A- 3 294 577
- US-A- 5 334 314
- US-A- 5 508 113

## Description

La présente invention concerne un corps creux imperméable en matériau thermoplastique.

Des corps creux imperméables en matériaux thermoplastiques sont connus depuis longtemps. En particulier, on connaît des réservoirs à carburant en matériau thermoplastique à perméabilité très faible par rapport aux hydrocarbures gazeux et liquides. Ces réservoirs connus se répartissent essentiellement en deux catégories distinctes : les réservoirs dont la surface intérieure a été traitée au moyen d'un gaz réactif (par exemple F₂ ou SO₃) qui modifie les propriétés de la matière plastique et imperméabilisent la surface des réservoirs traités et les réservoirs constitués d'une structure multicouche renfermant une couche interne réalisée en matériau barrière, généralement mince et peu résistante du point de vue mécanique, le matériau barrière bloquant la perméation des hydrocarbures.

On connaît aussi le brevet GB-1,006,622 qui décrit une méthode pour améliorer les propriétés d'adhésion de films minces de polypropylène destinés à l'emballage via l'enduction sur ces films d'une couche d'alcool polyvinylique protégée par un revêtement ("Treatment 4", page 9, ligne 18).

Toutefois, on constate qu'avec cette méthode connue, l'adhérence de la couche d'alcool polyvinylique elle-même sur le substrat polypropylène n'est pas bonne. En particulier, lorsqu'il s'agit de paroi d'épaisseur nettement plus importante que celle d'un film mince pour l'emballage, telle que les parois rencontrées dans les corps creux pouvant par exemple servir de réservoir à carburant, l'adhérence n'est pas suffisante pour garantir à long terme la tenue mécanique de la couche d'alcool polyvinylique.

L'invention a pour but de fournir un corps creux en matériau thermoplastique imperméable aux hydrocarbures et qui ne nécessite pas de traitement au moyen de gaz très réactifs tels que le fluor ou l'anhydride sulfurique, ni la mise en oeuvre complexe obligatoire de structures multicouches emprisonnant une couche barrière à l'intérieur de la structure.

A cet effet l'invention concerne un procédé d'imperméabilisation d'un corps creux en matériau thermoplastique comprenant au moins une polyoléfine selon lequel dans une première étape, on enduit d'abord au moins une partie de la surface d'au moins une des faces du corps creux d'un film d'alcool polyvinylique et, dans une seconde étape, on diminue la solubilité dans l'eau du film par réticulation de ses molécules au moyen d'un agent chimique et/ou dépôt sur le film d'une couche de protection, et selon lequel l'adhésion du film d'alcool polyvinylique est activée par la génération localisée d'énergie calorifique.

Par corps creux, on désigne toute structure dont la surface présente au moins une partie vide ou concave. De préférence le corps creux désigne ici une structure fermée destinée à contenir un liquide et/ou un gaz. Particulièrement préférés sont les cuves et les réservoirs. Les corps creux selon l'invention sont particulièrement bien adaptés à leur utilisation comme réservoir à carburant, notamment ceux présents sur - ou destinés à équiper - les véhicules automobiles. Par extension, ils désignent aussi les divers accessoires qui peuvent être associés à ces corps creux, de même que les interfaces de raccordement de ces accessoires avec les corps creux. De tels accessoires sont, par exemple, des pompes et modules de puisage, canisters, clapets et tuyauteries associés au corps creux, qu'ils soient fixés sur ce corps creux ou simplement reliés à celui-ci.

Le corps creux conforme à l'invention est un corps creux de perméabilité aux carburants liquides ou gazeux fortement réduite, en particulier aux hydrocarbures et aux alcools de moins de 10 atomes de carbone, ainsi que leurs mélanges. Les corps creux selon l'invention permettent de limiter l'émission cumulée sur un total de 24 heures à moins de 2g d'hydrocarbures et/ou d'alcools.

Par matériau thermoplastique, on désigne toute matière comprenant au moins un polymère qui peut être mis en forme non permanente par au moins un traitement thermique. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Les polymères thermoplastiques comprennent aussi les élastomères thermoplastiques, ainsi que leurs mélanges.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut trouver dans le corps creux des polyoléfines, des polyoléfines greffées, des polyesters thermoplastiques, des polycétones, des polyamides et leurs copolymères.

Un copolymère souvent utilisé est le copolymère éthylène - alcool vinylique (EVOH). Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques.

Le matériau thermoplastique du corps creux conforme à l'invention comprend au moins une polyoléfine. De préférence, cette polyoléfine est du polyéthylène. Le polyéthylène de haute densité (PEHD) a donné d'excellents résultats.

Selon l'invention, le matériau thermoplastique est revêtu sur au moins une de ses faces et au moins une partie de sa surface d'un film d'alcool polyvinylique. Le revêtement peut être réalisé sur la totalité d'une face ou des deux faces d'un corps creux. Il peut aussi n'être que localisé à une partie de sa surface, aux endroits nécessitant une plus grande imperméabilisation.

L'alcool polyvinylique est le plus souvent fabriqué par hydrolyse d'acétate de polyvinyle. L'alcool polyvinylique peut encore toutefois contenir une certaine proportion de groupes acétate qui n'ont pas été hydrolysés au cours de sa fabrication. La qualité de l'alcool polyvinylique présente sur le matériau thermoplastique des corps creux selon l'invention peut varier dans une certaine gamme par rapport à son taux d'hydrolyse. Des taux d'hydrolyse d'au moins 80 % du nombre total de groupes acétate et, de préférence, d'au moins 95 % conviennent par exemple bien pour les films recouvrant le matériau thermoplastique des corps creux conformes à l'invention.

Le film d'alcool polyvinylique recouvrant le matériau thermoplastique du corps creux conforme à l'invention offre l'avantage de présenter une perméabilité et une solubilité dans l'eau fortement diminuées. Ces propriétés particulières découlent directement d'un état particulier du film d'alcool polyvinylique qui est réticulé par un agent chimique ou, alternativement, qui est recouvert à son interface avec l'atmosphère extérieure d'une couche de protection isolant le film d'alcool polyvinylique de la vapeur d'eau atmosphérique, de même que de l'eau pouvant se trouver contenue à l'intérieur du corps creux. Il est aussi possible de simultanément combiner l'état réticulé par un agent chimique et la couche de protection recouvrant le film d'alcool polyvinylique.

Une variante intéressante au corps creux selon l'invention est celle dans laquelle le matériau thermoplastique comprend un promoteur d'adhésion. Ce promoteur peut se trouver réparti dans la masse de la paroi du corps creux, ou encore, au contraire, n'être présent que dans sa partie superficielle au voisinage du film d'alcool polyvinylique.

Toute composition capable de renforcer les propriétés d'adhésion du film d'alcool polyvinylique sur le substrat comprenant une polyoléfine convient à titre de promoteur d'adhésion. Un promoteur d'adhésion ayant donné de bons résultats est un peroxyde acide ou une polyoléfine greffée par au moins un groupement polaire. Des groupements polaires convenant bien sont des groupements carboxyliques. Le polyéthylène greffé par un anhydride et, en particulier, l'anhydride maléique a donné d'excellents résultats.

Une autre variante intéressante pour promouvoir l'adhésion est la présence de sites acides à l'interface du matériau thermoplastique. Ces sites acides sont particulièrement avantageux lorsque le film d'alcool polyvinylique est réticulé par un ester.

Dans l'éventualité où le film d'alcool polyvinylique est recouvert d'une couche de protection, celle-ci peut être une couche qui comprend un époxy souple, un vernis polyuréthane ou une peinture acrylique.

Lorsque le film d'alcool polyvinylique est réticulé par un agent chimique, celui-ci est choisi parmi les agents d'estérification et d'acétalisation, ou parmi un mélange de deux ou plusieurs de ces agents. On peut aussi choisir l'agent chimique parmi un mélange de plusieurs agents appartenant à au moins une des deux catégories précitées. Par agents d'estérification et d'acétalisation, on entend désigner toute composition qui comprend au moins un composé chimique capable de réagir avec au moins les molécules superficielles du film d'alcool polyvinylique pour produire, respectivement, des groupes ester ou acétal avec les groupes hydroxyle présents sur les chaînes carbonées de ces molécules.

De préférence, l'agent chimique de réticulation est un agent d'estérification. Les agents d'estérification qui conviennent bien sont choisis parmi l'acide acétique, l'éthylhexylglycidyléther, les acides ou diacides organiques à longue chaîne et leurs chlorures d'acide. On peut également choisir l'agent chimique parmi les isocyanates et l'urée.

Par acides ou diacides organiques à longue chaîne, on entend désigner des acides carboxyliques aliphatiques et/ou aromatiques qui comprennent au moins une chaîne carbonée d'au moins 8 atomes de carbone.

Par isocyanates on entend désigner les composés qui comprennent au moins un radical isocyanate (-NCO). Les monoisocyanates et les diisocyanates conviennent bien. Les monoisocyanates sont préférés.

Un agent d'estérification qui a donné d'excellents résultats est l'acide acétique.

Dans le procédé selon l'invention on réalise une activation de l'adhésion du film d'alcool polyvinylique. Un mode d'activation convenant bien est la génération localisée d'énergie calorifique. Tous les moyens aptes à générer de la chaleur à l'interface entre le film d'alcool polyvinylique et le substrat en matériau thermoplastique présent dans le corps creux peuvent être utilisés. La génération localisée de chaleur peut se faire, par exemple, via un courant d'air chaud dirigé vers le film d'alcool polyvinylique ou par balayage de la surface du film d'alcool polyvinylique recouvrant le substrat en matériau thermoplastique au moyen d'un rayonnement électromagnétique de longueur d'onde appropriée pour générer de la chaleur par absorption dans les polymères.

De préférence, la génération localisée d'énergie calorifique se fait par balayage de la surface du film d'alcool polyvinylique recouvrant le substrat en matériau thermoplastique au moyen d'un rayonnement infrarouge ou d'un rayonnement laser de longueur d'onde au plus égale à 15000 nm. Il convient aussi, le plus souvent que le rayonnement infrarouge ou le rayonnement laser utilisé pour le balayage de la surface soit de longueur d'onde d'au moins 500 nm.

Une autre méthode préférée de génération localisée d'énergie calorifique est la mise en oeuvre d'un plasma dans l'atmosphère gazeuse directement en contact avec le film d'alcool polyvinylique. Tous les types de plasma et les méthodes pour les générer compatibles avec les conditions opératoires de l'opération d'enduction de la surface du corps creux par le film d'alcool polyvinylique conviennent.

Dans le cas de l'enduction de la face interne d'un corps creux (côté concave) fermé, on préfère un plasma sous vide d'argon, d'azote ou d'un mélange d'argon et d'azote.

Dans le cas de l'enduction de la face extérieure d'un corps creux (côté convexe), on préfère utiliser une torche plasma atmosphérique à l'azote.

Dans les deux cas, il est avantageux d'assister la génération du plasma avec un générateur de rayonnement micro-ondes.

L'utilisation d'un plasma comme générateur localisé d'énergie calorifique peut aussi être combinée avec la génération préalable de sites acides comme exposé plus haut. Cette génération de sites acides peut avantageusement être effectuée aussi au moyen d'un plasma. De préférence, on utilise ici un plasma CO₂. Ici encore, on travaille sous vide ou à pression atmosphérique (torche plasma) selon que l'on enduit la face interne d'un corps creux fermé ou sa face externe. Après la génération de sites acides, on peut alors promouvoir l'adhésion du film d'alcool polyvinylique par génération de chaleur localisée avec un plasma à l'argon ou à l'azote sous vide ou avec une torche plasma atmosphérique à l'azote.

L'étape d'enduction de la surface du corps creux par l'alcool polyvinylique peut s'effectuer par toute méthode ou technique apte à produire une enduction d'un film d'alcool polyvinylique d'épaisseur régulière. Une technique qui a donné de bons résultats est celle qui consiste à projeter sur la surface à enduire une solution aqueuse d'alcool polyvinylique et de soumettre ensuite le corps creux enduit à un séchage ayant pour but d'évaporer l'eau du solvant. Un séchage au moyen d'air chaud convient bien.

## Revendications

1. - Procédé d'imperméabilisation d'un corps creux en matériau thermoplastique comprenant au moins une polyoléfine selon lequel dans une première étape, on enduit d'abord au moins une partie de la surface d'au moins une des faces du corps creux d'un film d'alcool polyvinylique et, dans une seconde étape, on diminue la solubilité dans l'eau du film par réticulation de ses molécules au moyen d'un agent chimique et/ou dépôt sur le film d'une couche de protection, et selon lequel l'adhésion du film d'alcool polyvinylique est activée par la génération localisée d'énergie calorifique.

2. - Procédé selon la revendication 1, **caractérisé en ce que** la couche de protection est choisie parmi celles qui comprennent un époxy souple, un vernis polyuréthane et une peinture acrylique.

3. - Procédé selon la revendication 1, **caractérisé en ce que** l'agent chimique est choisi parmi les agents d'estérification et d'acétalisation, les isocyanates ou l'urée.

4. - Procédé selon la revendication 3, **caractérisé en ce que** l'agent chimique de réticulation est un agent d'estérification choisi parmi au moins un des composés suivants : acide acétique, éthylhexylglycidyléther, acides ou diacides organiques à longue chaîne et leurs chlorures d'acide.

5. - Procédé selon la revendication 4, **caractérisé en ce que** l'agent d'estérification est l'acide acétique.

6. - Procédé selon l'une quelconque des revendications 1 à 5, **caractérisé en ce que** le matériau thermoplastique contient aussi un promoteur d'adhésion du film d'alcool polyvinylique.

7. - Procédé selon l'une quelconque des revendications 1 à 5, **caractérisé en ce que** la génération localisée d'énergie calorifique se fait par balayage de la surface au moyen d'un rayonnement électromagnétique de longueur d'onde de 500 à 15000 nm choisi parmi le rayonnement infrarouge et le rayonnement laser.

8. - Procédé selon l'une quelconque des revendications 1 à 5, **caractérisé en ce que** la génération localisée d'énergie calorifique se fait par la mise en oeuvre d'un plasma à l'argon ou à l'azote.

9. - Procédé selon la revendication 6, **caractérisé en ce que** le promoteur d'adhésion est sélectionné parmi les polyoléfines greffées avec un anhydride, les peroxydes acides et les sites acides produits par un plasma CO₂.

10. - Procédé selon l'une quelconque des revendications 1 à 5, **caractérisé en ce que** l'étape d'enduction de la surface du corps creux par l'alcool polyvinylique est réalisée par projection sur la surface d'une solution aqueuse d'alcool polyvinylique suivie d'un séchage ayant pour but d'évaporer l'eau du solvant.

## Claims

1. Process for impermeabilizing a hollow body made of thermoplastic material comprising at least one polyolefin according to which, in a first step, at least part of the surface of at least one of the faces of the hollow body is firstly coated with a polyvinyl alcohol film and, in a second step, the solubility in water of the film is reduced by crosslinking its molecules by means of a chemical agent and/or by depositing an epoxy coating on the film, and the adhesion of the polyvinyl alcohol is activated by localized head generation.

2. Process according to claim 1, **characterized in that** the protective layer is chosen from those comprising a flexible epoxy, a polyurethane varnish and an acrylic paint.

3. Process according to claim 1, **characterized in that** the chemical agent is chosen from esterification and acetalization agents, isocyanates and urea.

4. Process according to claim 3, **characterized in that** the chemical crosslinking agent is an esterification agent chosen from at least one of the following compounds: acetic acid, ethylhexyl glycidyl ether, long-chain organic acids or diacids and acid chlorides thereof.

5. Process according to claim 4, **characterized in that** the esterification agent is acetic acid.

6. Process according to any one of claims 1 to 5, **characterized in that** the thermoplastic material also contains an adhesion promoter for the polyvinyl alcohol film.

7. Process according to any one of claims 1 to 5, **characterized in that** the localized heat generation takes place by scanning the surface with electromagnetic radiation of wavelength from 500 to 15 000 nm chosen from infrared radiation and laser radiation.

8. Process according to any one of claims 1 to 5, **characterized in that** the localized heat generation takes place by using an argon or nitrogen plasma.

9. Process according to claim 6, **characterized in that** the adhesion promoter is selected from polyolefins grafted by an anhydride, acid peroxides and acid sites produced by a CO₂ plasma.

10. Process according to any one of claims 1 to 5, **characterized in that** the step of coating the surface of the hollow body with polyvinyl alcohol is carried out by spraying the surface with an aqueous polyvinyl alcohol solution followed by drying for the purpose of evaporating the water of the solvent.

## Patentansprüche

1. Verfahren zum Undurchlässigmachen eines Hohlkörpers aus thermoplastischem Material, das wenigstens ein Polyolefin umfaßt, wonach in einer ersten Stufe zunächst wenigstens ein Teil der Oberfläche wenigstens einer Seite des Hohlkörpers mit einem Polyvinylalkoholfilm beschichtet wird und in einer zweiten Stufe die Wasserlöslichkeit des Filmes durch Vernetzen seiner Moleküle mit Hilfe eines chemischen Mittels und/oder Aufbringen einer Schutzschicht auf den Film verringert wird und wonach die Adhäsion des Polyvinylalkoholfilmes durch eine lokalisierte Bildung von Wärmeenergie aktiviert wird.

2. Verfahren nach Anspruch 1, **dadurch gekennzeichnet, dass** die Schutzschicht unter jenen ausgewählt wird, die ein weiches Epoxyharz, einen Polyurethanlack und einen Acrylanstrich umfassen.

3. Verfahren nach Anspruch 1, **dadurch gekennzeichnet, dass** das chemische Mittel unter den Veresterungs- und Acetalisierungsmitteln, den Isocyanaten oder Harnstoff ausgewählt wird.

4. Verfahren nach Anspruch 3, **dadurch gekennzeichnet, dass** das chemische Vernetzungsmittel ein Veresterungsmittel ist, das unter wenigstens einer der nachfolgenden Verbindungen: Essigsäure, Ethylhexylglycidylether, langkettigen organischen Säuren oder Disäuren und ihren Säurechloriden ausgewählt wird.

5. Verfahren nach Anspruch 4, **dadurch gekennzeichnet, dass** das Veresterungsmittel die Essigsäure ist.

6. Verfahren nach einem der Ansprüche 1 bis 5, **dadurch gekennzeichnet, dass** das thermoplastische Material auch einen Adhäsionspromotor für den Polyvinylalkoholfilm enthält.

7. Verfahren nach einem der Ansprüche 1 bis 5, **dadurch gekennzeichnet, dass** die lokalisierte Bildung von Wärmeenergie durch Bestreichen der Oberfläche mit elektromagnetischer Strahlung mit einer Wellenlänge von 500 bis 15000 nm, ausgewählt unter Infrarotstrahlung und Laserstrahlung, erfolgt.

8. Verfahren nach einem der Ansprüche 1 bis 5, **dadurch gekennzeichnet, dass** die lokalisierte Bildung von Wärmeenergie durch Anwendung eines Argon- oder Stickstoffplasmas erfolgt.

9. Verfahren nach Anspruch 6, **dadurch gekennzeichnet, dass** der Adhäsionspromotor unter den mit einem Anhydrid gepfropften Polyolefinen, den sauren Peroxyden und den durch ein CO₂-Plasma gebildeten sauren Stellen gewählt wird.

10. Verfahren nach einem der Ansprüche 1 bis 5, **dadurch gekennzeichnet, dass** die Beschichtungsstufe der Oberfläche des Hohlkörpers mit dem Polyvinylalkohol durch Aufsprühen einer wässerigen Polyvinylalkohollösung auf die Oberfläche mit anschließendem Trocknen zum Verdampfen des Wassers des Lösungsmittels erfolgt.
